# EUROPEAN PATENT APPLICATION

(11) **EP 4 371 945 A1**
(43) Date of publication of application: **22.05.2024**
(21) Application number: 23209424.3
(22) Date of filing: 13.11.2023
(51) Int. Cl.: C02F 1/46, C02F 1/469, C02F 1/461, C02F 103/02

(54) **CAPACITIVE DESALINATION FILTRATION SYSTEM AND CIRCULATING WATER FILTRATION METHOD USING SAME**

(30) Priority: 18.11.2022 KR 20220155644
(71) Applicant: Doosan Enerbility Co., Ltd., Seongsan-gu Changwon-si, Gyeongsangnam-do 51711 (KR)
(72) Inventor: Kang, Wee Kwan, Yongin-si (KR); Lee, Jin Woon, Seongnam-si (KR); Jo, Ho Yong, Yongin-si (KR); You, Jang Yong, Suwon-si (KR)
(74) Representative: Ter Meer Steinmeister & Partner

(57) **Abstract**

Proposed is a capacitive desalination filtration system and a circulating water filtration method using same, wherein the system includes a circulating water tank unit connected to a transport pipe and configured to store circulating water, a capacitive desalination unit connected to the circulating water tank unit and supplied with the circulating water from the circulating water tank unit and configured to generate production water during charging and concentrated water during discharging, a production water tank unit connected to the capacitive desalination unit and configured to store the production water generated while passing through the capacitive desalination unit during charging, and a discharging water tank unit connected to the capacitive desalination unit and configured to store the concentrated water generated while passing through the capacitive desalination unit during discharging and to supply a portion of stored concentrated water to the capacitive desalination unit when the capacitive desalination unit is discharged.

## Description

The present application claims priority to Korean Patent Application No. 10-2022-0155644, filed on November 18, 2022.

### BACKGROUND

### Technical Field

The present disclosure relates to a capacitive desalination filtration system and a circulating water filtration method using same and, more particularly, to a capacitive desalination filtration system configured to desalinate dissolved ions by filtering circulating water to generate production water in order to reuse the circulating water having been used in a power plant and a circulating water filtration method configured to filtrate circulating water using same.

### 2. Description of the Related Art

With reference to the Background Art described in Korean Patent No. 10-2040394, desalination technology plays a very important role in determining whether or not it is harmful to a human body, process efficiency, product performance, or the like during generating water or industrial water. For example, when a person drinks water containing heavy metals, nitrate nitrogen, fluorine ions, and the like for a long time, it may have a fatal effect on health. In addition, boiler water containing hard materials may cause scale in boilers or heat exchangers, which may significantly reduce process efficiency, and in the electronics and pharmaceutical industries, a process of removing ionic materials acts as an important factor in determining product performance.

An ion exchange method using an ion exchange resin is mainly used as a method of removing ionic substances in an infusion solution. Such a method may effectively separate most of the ionic materials but has a problem in that a large amount of acid, base, or salt waste liquid is generated in the process of regenerating the resin in which the ion exchange has been completed. In addition, although membrane technologies such as a reverse osmosis membrane method, an electrodialysis method, and the like are being applied, they have problems such as reduction in treatment efficiency due to membrane fouling, cleaning of contaminated membranes, and periodic replacement of membranes. In order to solve this problem, capacitive desalination technology using the principle of electric double layer has recently been applied to the desalination process.

The capacitive deionization (CDI) process is a technology that removes ions by using an adsorption reaction of ions by electrical attraction generated from an electric double layer provided on a surface of an electrode when a potential is applied to the electrode. Specifically, in the capacitive desalination process, when a voltage is applied within a potential range in which an electrolysis reaction of water does not occur, a certain amount of charge is charged to the electrode. When inflow water containing ions is passed through the charged electrode, ions with opposite charges to the charged electrode move to each electrode by electrostatic force and are adsorbed on the surface of the electrode, and the water that has been passed through the electrode becomes the pure desalinated water the ions are removed from, and the capacitive desalination method is positioned as an environmentally friendly method of water decontamination by not using chemicals during the process.

Capacitive deionization (CDI) electrochemically removes ions from salty water. A salty water process stream typically flows between two electrodes (carbon electrodes) held at a potential difference of about 1.2 to 1.5 V. Ions in solution are attracted to an opposite pole. Along with the ions being electrically absorbed on the electrodes and removed from the process stream, a deionization cycle continues until the electrodes are saturated with the ions. Thereafter, during the regeneration cycle, the two electrodes are discharged, or the polarity of the electrodes becomes to be reversed. Accordingly, the ions are released into the wastewater stream which has a much higher salt concentration compared to the process stream. Such a method has a much faster cycle than conventional water softeners using ion exchange resins, is easy to operate and maintain, and along with such advantages, is economical in terms of cost.

In the capacitive desalination process, negatively charged ions (anions) are removed from the water and stored at the anode. Similarly, positively charged ions (cations) are stored in the cathode. A main advantage of CDI is the ability to remove with high recovery rates a wide range of ionic contaminants. CDI is able to remove almost all ionic contaminants: such as sulfate, nitrate, iron, arsenic, and fluorine as well as sodium, calcium, magnesium salts, and the like.

An operation of the CDI involves a series of charging and discharging for a flow-through capacitor consisting of an anode and cathode. In charging the storage battery, a static electric field is created between the electrodes of the flow-through capacitor to smoothly absorb the ions from the water flowing between the electrodes.

Generally, capacitive desalination (CDI) filtration systems are used to remove from the fluid undesirable concentrated contaminants such as salts dissolved in the fluid. The CDI system is configured to be applied in a variety of ways in each home as well as in industrial and commercial fields. Examples of such applications include desalination of seawater, softening of especially hard water, and removal of various undesirable substances such as salts (such as chlorides or sulfates), nitrates, nitrites, ammonia, heavy metals, organic matter, trace pollutants, and/or the like from water. Other applications besides the above may include the deionization of fluids in industrial processes or the concentration of contaminants that are not easy to dispose of or of which recovery for reuse is advantageous.

The CDI filtration system is suitable for purifying water by removing ionized particles, which are likely to exist under an electric field, such as calcium, magnesium ions, and the like that act as a major cause of scale formation in pipes, such as hardness components of water in solution. As water flows between the electrodes for treatment of the stream, a voltage potential is established between the electrodes. Components in the water are attracted by this voltage potential to adhere to at least temporarily either one of the electrodes, so the substantially purified water may exit the capacitor during that time.

Despite its inherent advantages, the CDI technology has not been developed yet to a level reaching an industrial process because of its limited plant efficiency and throughput. One of the factors influencing the suitability of the application is a low water recovery rate (for example, in relation to other processes used for the desalination of brackish water), wherein the water recovery rate is defined as a ratio of the amount of treated water obtained to the total amount of influent water.

In the past, the CDI filtration system was operated by changing the flow rate during charging and discharge, but the flow rate during discharging is too low, resulting in a dead zone in which water does not flow inside the module of the system. Accordingly, dissolved ions adsorbed in such a dead zone are not easily desorbed, thereby increasing the conductivity of the charging water in the next operation cycle. As a result, there has occurred a problem that the final quality of the generated water may not be met.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and an object of the present disclosure is to provide a capacitive desalination filtration system and a circulating water filtration method using same to allow a target water recovery rate and a salt removal rate to be achieved while preventing a dead zone in which water does not flow by making a flow rate during discharging equal to a flow rate during charging.

At least one of these objects is solved by the features of the independent claims.

According to one aspect of the present disclosure, there may be provided a capacitive desalination filtration system configured to desalinate dissolved ions by filtering circulating water to generate production water in order to reuse the circulating water having been used in a power plant, the system including: a circulating water tank unit connected to a transport pipe transporting the circulating water and configured to store the circulating water; a capacitive desalination unit connected to the circulating water tank unit and supplied with the circulating water from the circulating water tank unit, configured to generate the production water that the dissolved ions are filtered out from the circulating water during charging and to generate concentrated water that the dissolved ions, which have been filtered out during charging, are dissolved into the circulating water during discharging; a production water tank unit connected to the capacitive desalination unit and configured to store the production water generated while passing through the capacitive desalination unit during charging; and a discharging water tank unit connected to the capacitive desalination unit and configured to store the concentrated water generated while passing through the capacitive desalination unit during discharging and to supply a portion of stored concentrated water to the capacitive desalination unit when the capacitive desalination unit is discharged, wherein, when the capacitive desalination unit is additionally discharged, the circulation water tank unit supplies the circulating water to the capacitive desalination unit.

According to a further aspect of the present disclosure, there may be provided a circulating water filtration method configured to desalinate dissolved ions by filtering circulating water to generate production water in order to reuse the circulating water having been used in a power plant, the method including: storing the circulating water in a circulating water tank unit in order to filter the circulating water; while charging or discharging the production water and the concentrated water containing the dissolved ions supplied by use of a capacitive desalination unit connected to the circulating water tank unit , generating the production water or the concentrated water, which is configured to generate the production water that the dissolved ions are filtered out or the concentrated water that the dissolved ions are dissolved in the circulating water; storing the production water and the concentrated water, which is configured to respectively store the production water and the concentrated water generated in the capacitive desalination unit in a production water tank unit and a discharging water tank unit connected to the capacitive desalination unit; and when the capacitive desalination unit is additionally discharged, regenerating the concentrated water, which is configured to regenerate the concentrated water by supplying the circulating water stored in the circulating water tank to the capacitive desalination unit.

The circulating water filtration method according to any one of the herein described aspects or embodiments may be performed by the capacitive desalination filtration system according to any one of the herein described aspects or embodiments. That is, the capacitive desalination filtration system according to any one of the herein described aspects or embodiments may be configured to perform the circulating water filtration method according to any one of the herein described aspects or embodiments.

The capacitive desalination filtration system and/or the circulating water filtration method according to any one of these aspects may include one or more of the following features:

The capacitive desalination unit may include at least one of: a first capacitive desalination unit connected to the circulating water tank unit; a second capacitive desalination unit connected to the production water tank unit and the discharging water tank unit; and a third capacitive desalination unit located between the first capacitive desalination unit and the second capacitive desalination unit and connected to the first capacitive desalination unit and the second capacitive desalination unit. The first capacitive desalination unit, the third capacitive desalination unit, and the second capacitive desalination unit may be connected in series, e.g. in the indicated order.

At least one of or each of the first capacitive desalination unit, the second capacitive desalination unit, and the third capacitive desalination unit may include: a flow pipe having the circulating water and discharging water introduced thereinto and flowed therein; an anode's nano-carbon electrode disposed on one side of the flow pipe; an anion exchange membrane disposed between the flow pipe and the anode's nano-carbon electrode; a cathode's nano-carbon electrode disposed on an opposite side of the flow pipe; and a cation exchange membrane disposed between the flow pipe and the cathode's nano-carbon electrode.

A nano-carbon electrode may denote an electrode including or being made of nano-carbon based materials, i.e. materials having a nano-carbon structure, e.g., graphene, carbon dots, graphene quantum dots, etc..

Temperatures of the circulating water and the discharging water supplied to the capacitive desalination unit may be in a range of 20°C to 80°C.

The capacitive desalination unit may perform an operation of one cycle during a set operation cycle time. At an end of each operation cycle performed by the capacitive desalination unit, an inner side of the capacitive desalination unit may be washed with circulating water supplied from the circulating water tank unit. Each operation cycle performed by the capacitive desalination unit may include a charging period and a discharging period, e.g. alternatingly repeated. A charging time (i.e. time of the charging period) and a discharging time (i.e. time of the discharging period) may sum up to the operation cycle time, i.e. the operation cycle may consist of the charging period and the discharging period. A charging time (i.e. time of the charging period) and/or a discharging time (i.e. time of the discharging period) may be half of a time for one operation cycle (operation cycle time). An additional discharging may be performed at the end of the discharging time, e.g. for a final one minute of the discharging time. During the additional discharging, an inner side of the capacitive desalination unit may be washed with circulating water supplied from the circulating water tank unit.

When the capacitive desalination unit may perform an operation of one cycle during N minutes, a charging time is N/2 minutes, a discharging time is N/2 minutes, and additional discharging is performed for a final one minute out of the discharging time, during the additional discharging, an inner side of the capacitive desalination unit may be allowed to be washed with the circulating water supplied from the circulating water tank unit.

The capacitive desalination unit may be configured to generate production water by being supplied with the circulating water from the circulating water tank unit when being charged during a first set time, and to discharge the production water to the production water tank unit. The capacitive desalination unit may be configured to generate concentrated water by being supplied with the concentrated water from the discharging water tank unit when being discharged during a second set time, and to discharge the concentrated water to the discharging water tank unit. The capacitive desalination unit may be configured to generate concentrated water by being supplied with the circulating water from the circulating water tank unit when being additionally discharged during a third set time, and to discharge the concentrated water to the discharging water tank unit.

The capacitive desalination unit may be configured: when being charged during a first set time (e.g. half of the operation cycle time, i.e. N/2 minutes), to generate production water by being supplied with the circulating water in a flow range of 20 to 30 SLPM (standard liter per minute) from the circulating water tank unit, and then to discharge the production water to the production water tank unit; when being discharged during a second set time (e.g. (N/2 -n) minutes, in particular (N/2 -1) minutes), to generate concentrated water by being supplied with the concentrated water in a flow range of 20 to 30 SLPM from the discharging water tank unit, and then to discharge the concentrated water to the discharging water tank unit; and when being additionally discharged during a third set time (e.g. n minutes, in particular 1 minute), to generate concentrated water by being supplied with the circulating water in a flow range of 30 SLPM from the circulating water tank unit, and then to discharge the concentrated water to the discharging water tank unit.

Conductivity of the circulating water supplied from the circulation water tank unit to the capacitive desalination unit may be 1000 µS/cm, and conductivity of the concentrated water supplied from the discharging water tank unit to the capacitive desalination unit may be 6000 µS/cm.

As described above, according to a capacitive desalination filtration system and a circulating water filtration method using same according to the present disclosure, circulating water such as heating water having been used in cogeneration can be efficiently treated for reuse.

In addition, it is possible to prevent an occurrence of a dead zone in which water does not flow by making a flow rate during discharging equal to a flow rate during charging, and it is possible to achieve a target water recovery rate and a salt removal rate by recirculating discharging water that has conventionally been used to be released.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a block diagram schematically showing a capacitive desalination filtration system according to an embodiment of the present disclosure;
FIG. 2 is a diagram showing a configuration of the capacitive desalination filtration system according to the embodiment of the present disclosure;
FIG. 3 is a diagram showing a principle of a capacitive desalination unit;
FIG. 4 is a diagram showing a structure of the capacitive desalination unit;
FIG. 5 is a conceptual diagram showing design conditions of a capacitive desalination unit for heating water; and
FIG. 6 is a flow chart showing a procedure of a circulating water filtration method according to another embodiment of the present disclosure.

### DETAILED DESCRIPTION

Hereinafter, an exemplary embodiment according to the present disclosure will be described in detail with reference to the accompanying drawings. Prior to this, terms or words used in the present specification and claims should not be construed as being limited to a usual or dictionary meaning and, on the basis of the principle that an inventor may appropriately define a concept of a term in order to explain his or her disclosure in the best way, should be construed as a meaning and concept consistent with the technical spirit of the present disclosure.

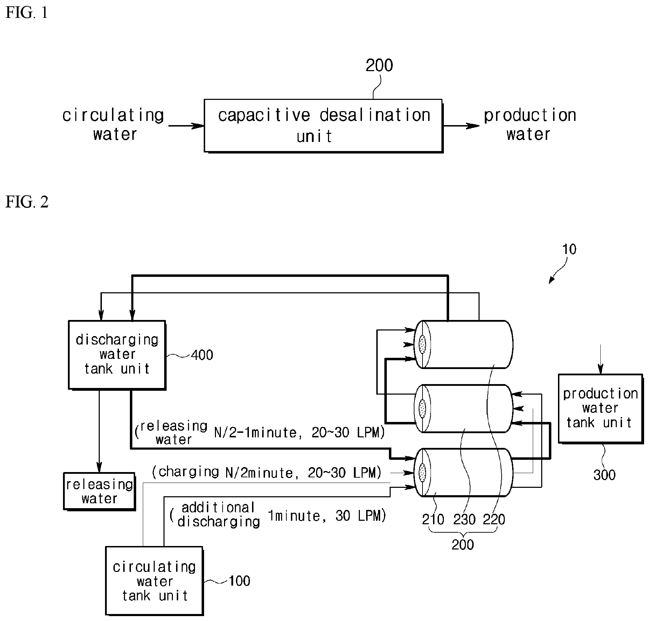

With reference to FIGS. 1 to 5, a capacitive desalination filtration system 10 according to an embodiment of the present disclosure is to desalinate dissolved ions by filtering circulating water to generate production water in order to reuse the circulating water having been used in a power plant, the system including: a circulating water tank unit 100; a capacitive desalination unit 200; a production water tank unit 300; and a discharging water tank unit 400.

The circulating water is used in a power generation system, particularly a cogeneration system, and may include all water used for circulation. That is, the circulating water may include city water by use of tap water and industrial water, cooling water for cooling, blowdown (BD) water, which is high-temperature water discharged from a cooling tower, heating water for heating, and the like.

A transport pipe (not shown) transporting the circulating water is connected to the circulating water tank unit 100, and the circulating water tank unit 100 serves to store the circulating water supplied through the transport pipe (not shown).

The circulating water tank unit 100 is connected to the capacitive desalination unit 200, and the capacitive desalination unit 200 serves to generate production water or concentrated water by charging or discharging the circulating water supplied from the circulating water tank unit 100.

The capacitive desalination unit 200 is connected to the production water tank unit 300 and the discharging water tank unit 400, wherein the production water tank unit 300 serves to store the production water generated while passing through the capacitive desalination unit 200 when the capacitive desalination unit 200 is charged, and the discharging water tank unit 400 serves to store the concentrated water generated while passing through the capacitive desalination unit 200 when the capacitive desalination unit 200 is discharged.

The capacitive desalination unit 200 includes a first capacitive desalination unit 210, a second capacitive desalination unit 220, and a third capacitive desalination unit 230. The first capacitive desalination unit 210 is connected to the circulating water tank unit 100, and the second capacitive desalination unit 220 is connected to the production water tank unit 300 and the discharging water tank unit 400.

The third capacitive desalination unit 230 is located between the first capacitive desalination unit 210 and the second capacitive desalination unit 220 and is connected to the first capacitive desalination unit 210 and the second capacitor desalination unit 220, and the first capacitive desalination unit 210, the third capacitive desalination unit 230, and the second capacitive desalination unit 220 may be connected in series.

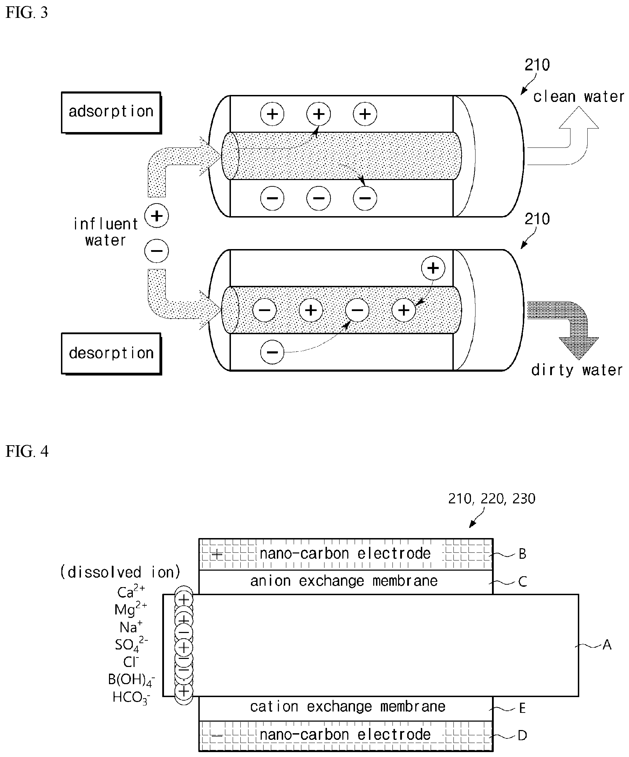

With reference to FIG. 4, the first capacitive desalination unit 210, the second capacitive desalination 220, and the third capacitive desalination 230 each have a flow pipe A, a anode's nano-carbon electrode B, an anion exchange membrane C, a cathode's nano-carbon electrode D, and a cation exchange membrane E.

The circulating water or the concentrated water is introduced into the flow pipe A to flow, the anode's nano-carbon electrode B is disposed on one side of the flow pipe A, and the anion exchange membrane C is disposed between the flow pipe A and the anode's nano-carbon electrode B.

The cathode's nano-carbon electrode D is disposed on an opposite side of the flow pipe A, and the cation exchange membrane E is disposed between the flow pipe A and the cathode's nano-carbon electrode D.

The anode's nano-carbon electrode B may provide a porous carbon matrix having a large specific surface area including charges in a nano-carbon structure, and the first capacitive desalination unit 210 to the third capacitive desalination unit 230 may be configured in various shapes depending on positions of the electrodes and a flow direction of feedwater.

The first capacitive desalination unit 210 shown in FIGS. 3 and 4 is composed of a type (flow-by CDI) in which the feedwater flows in a direction perpendicular to an electric field between the anode's nano-carbon electrode B and the cathode's nano-carbon electrode D. Differently from this, other types of capacitive desalination units may be configured such that the feedwater passes directly through the porous carbon electrode, and at this time, the flow of the feedwater is parallel to the electric field (flow-through CDI). Compared to the flow-by CDI, the flow-through CDI does not require a space where the feedwater flows between the electrodes, thus is possible to be compactly configured, and has an advantage in that adsorption efficiency is high because feedwater passes through the carbon electrodes.

In the circulating water flowing into the capacitive desalination unit 200 including the first capacitive desalination unit 210 to the third capacitive desalination unit 230, dissolved ions of Ca²⁺, Mg²⁺, Na⁺, SO₄²⁻, Cl⁻, B(OH)₄⁻ and HCO₃⁻ may be included.

When the circulating water flows into the first capacitive desalination unit 210 to the third capacitive desalination unit 230 of the capacitive desalination unit 200 and the capacitive desalination unit 200 is charged, among the dissolved ions, anions may be removed from the influent and adsorbed on the anion exchange membrane C of a side of the anode's nano-carbon electrode B, and cations may be removed from the influent and adsorbed on the cation exchange membrane E of a side of the cathode's nano-carbon electrode D. Accordingly, the water flowing out of the capacitive desalination unit 200 becomes clean water, that is, production water.

When the circulating water flows into the first capacitive desalination unit 210 to the third capacitive desalination unit 230 of the capacitive desalination unit 200 and the capacitive desalination unit 200 is discharged, the anion adsorbed on the anion exchange membrane C of the side of the anode's nano-carbon electrode B is desorbed and dissolved in the circulating water, and the cations adsorbed on the cation exchange membrane E of the side of the cathode's nano-carbon electrode D may be desorbed and dissolved in circulating water. Accordingly, the water flowing out of the capacitive desalination unit 200 becomes dirty water, that is, concentrated water.

The production water generated through the capacitive desalination unit 200 is supplied to and stored in the production water tank unit 300, and the production water tank unit 300 may be connected to the second capacitive desalination unit 220 of the capacitive desalination unit 200.

The concentrated water generated through the capacitive desalination unit 200 is supplied to and stored in the discharging water tank unit 400, and the discharging water tank unit 400 supplies a portion of the concentrated water stored therein to the capacitive desalination unit 200 when the capacitive desalination unit 200 is discharged. Here, the discharging water tank unit 400 may be connected to the second capacitive desalination unit 220 of the desalination unit 200.

Temperatures of the circulation water supplied to the capacitive desalination unit 200 through the circulating water tank unit 100 and the discharging water supplied to the capacitive desalination unit 200 through the discharging water tank unit 400 may be 20-80°C. Blowdown (BD) water, which is high-temperature water discharged from a cooling tower of a power plant, and heating water for heating in a cogeneration system may be at a high temperature of no less than 60°C. Conventional ion exchange resins have had a problem in that they are difficult to use due to an occurrence of thermal damage when processing high-temperature water of no less than 60°C, but the capacitive desalination unit 200 may treat even high-temperature water of about 60 to 80°C without thermal damage.

The capacitive desalination unit 200 may repeatedly proceed with an operation of one cycle as in the following: when being charged during a first set time (N/2 minutes), generating production water by being supplied with the circulating water in a flow range of 20 to 30 SLPM from the circulating water tank unit 100, and then discharging the production water to the production water tank unit 300; when being discharged during a second set time (N/2-1 minutes), generating concentrated water by being supplied with the concentrated water in a flow range of 20 to 30 SLPM from the discharging water tank unit 400, and then discharging the concentrated water to the discharging water tank unit 400, and when being additionally discharged during a third set time (1 minute), generating concentrated water by being supplied with the circulating water in a flow range of 30 SLPM from the circulating water tank unit 100, and then discharging the concentrated water to the discharging water tank unit 400, wherein a period of one cycle is N minutes, and when being additionally discharged during the third set time (1 minute), while allowing an inner side of the capacitive desalination unit 200 to be washed with the circulating water supplied from the circulating water tank unit 100, the concentrated water may be generated.

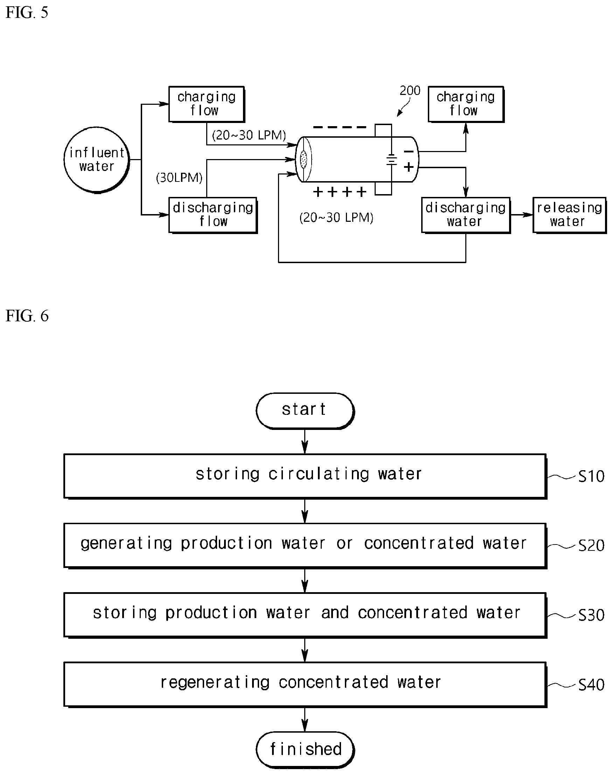

With reference to FIGS. 2 and 5, in the case the cycle is set to 10 minutes, and when being charged, the capacitive desalination unit 200 is supplied with 30 SLPM of the circulating water from the circulating water tank unit 100 for 5 minutes to allow 5 × 30 = 150 L of production water to be generated and then discharged, and when being additionally discharged, the capacitive desalination unit 200 is supplied with 30 SLPM of the circulating water from the circulating water tank unit 100 for 1 minute to allow 30 L of concentrated water to be generated and then discharged, wherein for the total influent 150L+30L=180L, 150L of the production water accounts for about 83%, and 30L of the concentrated water accounts for about 17%.

Conductivity (TS) of the circulating water supplied from the circulation water tank unit 100 to the capacitive desalination unit 200 may be 1000 µS/cm, and conductivity (TS) of the concentrated water supplied from the discharging water tank unit 400 to the capacitive desalination unit 200 may be 6000 µS/cm.

With reference to FIG. 6, a circulating water filtration method according to another embodiment of the present disclosure is to desalinate dissolved ions by filtering circulating water to generate production water in order to reuse the circulating water having been used in a power plant, the method including: storing the circulating water in S100; generating the production water or concentrated water in S200; storing the production water and concentrated water in S300; and regenerating the concentrated water in S400.

With reference to FIGS. 2 and 6, the storing the circulating water in S100 is a step of storing the circulating water for filtering in the circulating water tank unit 100, wherein the circulating water tank unit 100 is connected to the transport pipe (not shown) transporting the circulating water and serves to store the circulating water supplied through the transport pipe (not shown).

Generating the production water or concentrated water in S200 is performed after passing through the storing the circulating water in S100. Here, the generating the production water or concentrated water in S200 is a step, while charging or discharging the production water and the concentrated water containing the dissolved ions supplied by use of a capacitive desalination unit (200) connected to the circulating water tank unit (100), of generating the production water that the dissolved ions have been filtered out from the circulating water or the concentrated water that the dissolved ions are dissolved in the circulating water.

The circulating water tank unit 100 is connected to the capacitive desalination unit 200, and the capacitive desalination unit 200 serves to generate the production water or the concentrated water by charging or discharging the circulating water supplied from the circulating water tank unit 100.

The capacitive desalination unit 200 includes a first capacitive desalination unit 210, a second capacitive desalination unit 220, and a third capacitive desalination unit 230, wherein the first capacitive desalination unit 210 is connected to the circulation water tank unit 100, and the second capacitive desalination unit 220 is connected to the production water tank unit 300 and the discharging water tank unit 400 supplying the concentrated water to the first capacitive desalination unit 210.

With reference to FIG. 4, the first capacitive desalination unit 210, the second capacitive desalination 220, and the third capacitive desalination 230 each have a flow pipe A, a anode's nano-carbon electrode B, an anion exchange membrane C, a cathode's nano-carbon electrode D, and a cation exchange membrane E.

The circulating water or the concentrated water is introduced into the flow pipe A to flow, the anode's nano-carbon electrode B is disposed on one side of the flow pipe A, and the anion exchange membrane C is disposed between the flow pipe A and the anode's nano-carbon electrode B.

The cathode's nano-carbon electrode D is disposed on an opposite side of the flow pipe A, and the cation exchange membrane E is disposed between the flow pipe A and the cathode's nano-carbon electrode D.

The anode's nano-carbon electrode B may provide a porous carbon matrix having a large specific surface area including charges in a nano-carbon structure, and the first capacitive desalination unit 210 to the third capacitive desalination unit 230 may be configured in various shapes depending on positions of the electrodes and a flow direction of feedwater.

When the circulating water flows into the first capacitive desalination unit 210 to the third capacitive desalination unit 230 of the capacitive desalination unit 200 and the capacitive desalination unit 200 is charged, among the dissolved ions, anions may be removed from the influent and adsorbed on the anion exchange membrane C of a side of the anode's nano-carbon electrode B, and cations may be removed from the influent and adsorbed on the cation exchange membrane E of a side of the cathode's nano-carbon electrode D. Accordingly, the water flowing out of the capacitive desalination unit 200 becomes clean water, that is, production water.

When the circulating water flows into the first capacitive desalination unit 210 to the third capacitive desalination unit 230 of the capacitive desalination unit 200 and the capacitive desalination unit 200 is discharged, the anion adsorbed on the anion exchange membrane C of the side of the anode's nano-carbon electrode B is desorbed and dissolved in the circulating water, and the cations adsorbed on the cation exchange membrane E of the side of the cathode's nano-carbon electrode D may be desorbed and dissolved in circulating water. Accordingly, the water flowing out of the capacitive desalination unit 200 becomes dirty water, that is, concentrated water.

With reference to FIGS. 2 and 6, storing the production water and the concentrated water in S300 is performed after passing through the generating the production water or the concentrated water in S200. Here, the storing the production water and the concentrated water in S300 is a step of storing the production water and the concentrated water generated in the capacitive desalination unit 200 into the circulating water tank unit 100 and discharging water tank unit 400, respectively.

The production water generated through the capacitive desalination unit 200 is supplied to and stored in the production water tank unit 300, and the production water tank unit 300 may be connected to the second capacitive desalination unit 220 of the capacitive desalination unit 200.

The concentrated water generated through the capacitive desalination unit 200 is supplied to and stored in the discharging water tank unit 400, and the discharging water tank unit 400 supplies some of the concentrated water stored therein to the capacitive desalination unit 200 when the capacitive desalination unit 200 is discharged. Here, the discharging water tank unit 400 may be connected to the second capacitive desalination unit 220 of the desalination unit 200.

Regenerating the concentrated water in S400 is generated after the storing the production water and the concentrated water in S300. Here, the regenerating the concentrated water in S400 is a step of regenerating the concentrated water by supplying the circulating water stored in the circulating water tank unit 100 to the capacitive desalination unit 200 when the capacitive desalination unit 200 is additionally discharged.

The capacitive desalination unit 200 may repeatedly proceed with an operation of one cycle as in the following: when being charged during a first set time (N/2 minutes), generating production water by being supplied with the circulating water in a flow range of 20 to 30 SLPM from the circulating water tank unit 100, and then discharging the production water to the production water tank unit 300; when being discharged during a second set time (N/2-1 minutes), generating concentrated water by being supplied with the concentrated water in a flow range of 20 to 30 SLPM from the discharging water tank unit 400, and then discharging the concentrated water to the discharging water tank unit 400, and when being additionally discharged during a third set time (1 minute), generating concentrated water by being supplied with the circulating water in a flow range of 30 SLPM from the circulating water tank unit 100, and then discharging the concentrated water to the discharging water tank unit 400, wherein a period of one cycle is N minutes, and when being additionally discharged during the third set time (1 minute), while allowing an inner side of the capacitive desalination unit 200 to be washed with the circulating water supplied from the circulating water tank unit 100, the discharging water may be generated.

Conductivity (TS) of the circulating water supplied from the circulation water tank unit 100 to the capacitive desalination unit 200 may be 1000 µS/cm, and conductivity (TS) of the concentrated water supplied from the discharging water tank unit 400 to the capacitive desalination unit 200 may be 6000 µS/cm.

Accordingly, the circulating water such as heating water used in cogeneration may be efficiently treated and reused, an occurrence of a dead zone in which water does not flow may be prevented by making a flow rate during discharging equal to a flow rate during charging, and a target water recovery rate and a salt removal rate may be achieved by recirculating the discharging water that has conventionally been used to be released.

Although the present disclosure has been described with reference to the embodiments shown in the drawings, this is merely exemplary, and those skilled in the art will understand that various modifications and other equivalent embodiments are possible therefrom. Therefore, the true technical protection scope of the present disclosure should be determined by the technical spirit of the appended claims.

## Claims

1. A capacitive desalination filtration system configured to desalinate dissolved ions by filtering circulating water to generate production water in order to reuse circulating water having been used in a power plant, the system comprising:
a circulating water tank unit (100) connected to a transport pipe transporting the circulating water and configured to store the circulating water;
a capacitive desalination unit (200) connected to the circulating water tank unit (100) to be supplied with the circulating water from the circulating water tank unit (100), wherein the capacitive desalination unit (200) is configured, when being charged, to generate the production water from the circulating water by filtering out ions from the circulating water, and when being discharged, to generate concentrated water by dissolving ions, which have been filtered out and accumulated during charging;
a production water tank unit (300) connected to the capacitive desalination unit (200) and configured to store the production water generated by the circulating water having passed through the capacitive desalination unit (200) while the capacitive desalination unit (200) is charged; and
a discharging water tank unit (400) connected to the capacitive desalination unit (200) and configured to store the concentrated water having passed through the capacitive desalination unit (200) while the capacitive desalination unit (200) is discharged, and to supply a portion of the stored concentrated water to the capacitive desalination unit (200) when the capacitive desalination unit (200) is discharged,
wherein, when the capacitive desalination unit (200) is additionally discharged, the circulation water tank unit (100) is configured to supply the circulating water to the capacitive desalination unit (200).

2. The system of claim 1, wherein the capacitive desalination unit (200) comprises:
a first capacitive desalination unit (210) connected to the circulating water tank unit (100);
a second capacitive desalination unit (220) connected to the production water tank unit (300) and to the discharging water tank unit (400); and
a third capacitive desalination unit (230) located between the first capacitive desalination unit (210) and the second capacitive desalination unit (220) and connected to the first capacitive desalination unit (210) and the second capacitive desalination unit (220),
wherein the first capacitive desalination unit (210), the third capacitive desalination unit (230), and the second capacitive desalination unit (220) are connected in series.

3. The system of claim 2, wherein the first capacitive desalination unit (210), the second capacitive desalination unit (220), and the third capacitive desalination unit (230) each comprise:
a flow pipe (A) for having the circulating water or concentrated water introduced thereinto to flow therein;
an anode's nano-carbon electrode (B) disposed on one side of the flow pipe (A);
an anion exchange membrane (C) disposed between the flow pipe (A) and the anode's nano-carbon electrode (B);
a cathode's nano-carbon electrode (D) disposed on another side of the flow pipe (A) opposite to the anode's nano-carbon electrode (B); and
a cation exchange membrane (E) disposed between the flow pipe (A) and the cathode's nano-carbon electrode (D).

4. The system of claim 1, 2 or 3, wherein temperatures of the circulating water and/or of the concentrated water supplied to the capacitive desalination unit (200) are in a range of 20°C to 80°C.

5. The system according to any one of the preceding claims, wherein the capacitive desalination unit (200) is configured to perform an operation of one cycle during a set operation cycle time of N minutes,
a charging time is N/2 minutes,
a discharging time is N/2 minutes, and
additional discharging is performed at the end of the discharging time,
wherein during the additional discharging, an inner side of the capacitive desalination unit (200) is washed with the circulating water supplied from the circulating water tank unit (100).

6. The system according to any one of the preceding claims, wherein the capacitive desalination unit (200) is configured:
when being charged during a first set time, to generate production water by being supplied with the circulating water in a flow range of 33.776 to 50.664 Pa•m³/s from the circulating water tank unit (100), and to discharge the production water to the production water tank unit (300); and/or
when being discharged during a second set time, to generate concentrated water by being supplied with the concentrated water in a flow range of 33.776 to 50.664 Pa•m³/s from the discharging water tank unit (400), and to discharge the concentrated water to the discharging water tank unit (400); and/or
when being additionally discharged during a third set time, to generate concentrated water by being supplied with the circulating water in a flow range of 50.664 Pa•m³/s from the circulating water tank unit (100), and to discharge the concentrated water to the discharging water tank unit (400).

7. The system of claim 6, wherein conductivity of the circulating water supplied from the circulation water tank unit (100) to the capacitive desalination unit (200) is 1000 µS/cm, and
conductivity of the concentrated water supplied from the discharging water tank unit (400) to the capacitive desalination unit (200) is 6000 µS/cm.

8. A circulating water filtration method configured to desalinate dissolved ions by filtering circulating water to generate production water in order to reuse circulating water having been used in a power plant, the method comprising:
storing (S10) the circulating water in a circulating water tank unit (100) in order to filter the circulating water;
generating (S20) the production water by filtering out ions from the circulated water supplied to a capacitive desalination unit (200) from the circulating water tank unit (100), while charging the capacitive desalination unit (200), and the concentrated water by dissolving ions, which have been filtered out by and accumulated in the capacitive desalination unit (200), while discharging the capacitive desalination unit (200);
storing (S30) the production water in a production water tank unit (300) and the concentrated water in a discharging water tank unit (400); and
when the capacitive desalination unit (200) is additionally discharged, regenerating (S40) the concentrated water by supplying the circulating water stored in the circulating water tank (100) to the capacitive desalination unit (200).

9. The method of claim 8, wherein the capacitive desalination unit (200) performs an operation of one cycle during a set operation cycle time of N minutes,
a charging time is N/2 minutes,
a discharging time is N/2 minutes, and
additional discharging is performed at the end of the discharging time,
wherein during the additional discharging, an inner side of the capacitive desalination unit (200) is allowed to be washed with the circulating water supplied from the circulating water tank unit (100).

10. The method of claim 8 or 9, wherein:
when being charged during a first set time, the capacitive desalination unit (200) generates production water by being supplied with the circulating water in a flow range of 33.776 to 50.664 Pa•m³/s from the circulating water tank unit (100), and discharges the production water to the production water tank unit (300); and/or
when being discharged during a second set time, the capacitive desalination unit (200) generates concentrated water by being supplied with the concentrated water in a flow range of 33.776 to 50.664 Pa•m³/s from the discharging water tank unit (400), and discharges the concentrated water to the discharging water tank unit (400); and/or
when being additionally discharged during a third set time, the capacitive desalination unit (200) generates concentrated water by being supplied with the circulating water in a flow range of 50.664 Pa•m³/s from the circulating water tank unit (100), and discharges the concentrated water to the discharging water tank unit (400).

11. The method of claim 10, wherein conductivity of the circulating water supplied from the circulation water tank unit (100) to the capacitive desalination unit (200) is 1000 µS/cm, and
conductivity (TS) of the concentrated water supplied from the discharging water tank unit (400) to the capacitive desalination unit (200) is 6000 µS/ cm.

12. The method of claim 9, wherein the capacitive desalination unit (200) comprises:
a first capacitive desalination unit (210) connected to the circulating water tank unit (100);
a second capacitive desalination unit (220) connected to the production water tank unit (300) and the discharging water tank unit (400); and
a third capacitive desalination unit (230) located between the first capacitive desalination unit (210) and the second capacitive desalination unit (220) and connected to the first capacitive desalination unit (210) and the second capacitive desalination unit (220),
wherein the first capacitive desalination unit (210), the third capacitive desalination unit 230, and the second capacitive desalination unit (220) are connected in series.

13. The method of claim 12, wherein the first capacitive desalination unit (210), the second capacitive desalination unit (220), and the third capacitive desalination unit (230) each comprise:
a flow pipe (A) for having the circulating water or concentrated water introduced thereinto to flow therein;
an anode's nano-carbon electrode (B) disposed on one side of the flow pipe (A);
an anion exchange membrane (C) disposed between the flow pipe (A) and the anode's nano-carbon electrode (B);
a cathode's nano-carbon electrode (D) disposed on another side of the flow pipe (A) opposite to the anode's nano-carbon electrode (B); and
a cation exchange membrane (E) disposed between the flow pipe (A) and the cathode's nano-carbon electrode (D).

14. The method of claim 13, wherein temperatures of the circulating water and/or of the concentrated water supplied to the capacitive desalination unit (200) are 20°C to 80°C.
